# EUROPÄISCHE PATENTANMELDUNG

(11) **EP 1 524 420 A2**
(43) Veröffentlichungstag der Anmeldung: **20.04.2005**
(21) Anmeldenummer: 04022125.1
(22) Anmeldetag: 17.09.2004
(51) Int. Cl.: F02B 29/04

(54) **Brennkraftmaschine mit Aufladung**

(30) Priorität: 16.10.2003 DE 10348136
(71) Anmelder: DaimlerChrysler AG, 70567 Stuttgart (DE)
(72) Erfinder: Breitling, Thomas, Dr., 71159 Mötzingen (DE); Kleineberg, Wolfgang, 75365 Calw (DE)

(57) **Zusammenfassung**

Es wird eine Brennkraftmaschine für ein Kraftfahrzeug vorgeschlagen, mit einer Aufladevorrichtung (5), die Ansaugluft auf ein höheres Druckniveau verdichtet, einem Ladeluftkühler (8), der die verdichtete Ansaugluft kühlt und einer Steuerungsvorrichtung, die die Temperatur des aus dem Ladeluftkühler (8) austretenden Luftstroms beeinflusst. Erfindungsgemäß ist bei der Brennkraftmaschine vorgesehen, daß die Steuerungsvorrichtung ein Luftsteuerungselement (14) umfasst, das mit Ladeluft durchströmte Kühlelemente (22) des Ladeluftkühlers (8) teilweise oder vollständig verschließt, so dass in Abhängigkeit von Betriebsparametern die wirksame Kühlfläche reduziert ist. Anwendung in Kraftfahrzeugen, insbesondere Personenkraftwagen.

## Beschreibung

Die Erfindung betrifft eine Brennkraftmaschine mit Aufladung nach dem Oberbegriff des Anspruchs 1.

Aus der Offenlegungsschrift DE 25 53 821 A1 ist eine Brennkraftmaschine mit einer Aufladevorrichtung bekannt, die mittels einer Steuerungsvorrichtung die Ladelufttemperatur der Brennkraftmaschine steuert. Am Ladeluftkühler ist eine Klappe angeordnet. Eine Steuerungsvorrichtung bewegt die Klappe so, dass der Kühlluftdurchsatz durch den Ladeluftkühler beeinflussbar ist. Verschließt die Klappe beispielsweise den Ladeluftkühler vollständig, so findet keine Kühlung der Ladeluft statt. Ermöglicht hingegen die Klappenstellung eine ungehinderte Durchströmung des Ladeluftkühlers, so erfolgt die maximale Kühlung der Ladeluft. Die Vorrichtung ermöglicht in Abhängigkeit des Betriebszustands der Brennkraftmaschine eine vorteilhafte Ladelufttemperatur einzustellen.

Aufgabe der Erfindung ist es demgegenüber, eine Vorrichtung zur Einstellung der Ladelufttemperatur dazustellen, die auf eine aufwändige Regelung des Kühlluftstroms verzichtet.

Diese Aufgabe wird durch eine Brennkraftmaschine mit den Merkmalen des Anspruchs 1 gelöst.

Die erfindungsgemäße Brennkraftmaschine zeichnet sich durch eine Steuerungsvorrichtung aus, die ein Luftsteuerungselement umfasst, das mit Ladeluft durchströmte Kühlelemente teilweise oder vollständig verschließt, so dass in Abhängigkeit von Betriebsparametern die wirksame Kühlfläche reduziert ist. Das Luftsteuerungselement leitet den Luftstrom derart um, dass nur noch ein Teil der im Ladeluftkühler zur Verfügung stehenden Kühlfläche durchströmt ist. Die durchströmten Kühlelemente sind je nach Kühlerbauart beispielsweise als parallel angeordnete Flach- oder Ovalrohre ausgebildet. Die Ladeluft gibt über die Oberfläche der Kühlelemente Wärme ab. Das Luftsteuerungselement verschließt in Abhängigkeit von Betriebsparametern wie beispielsweise Kühlmitteltemperatur, Lastzustand, Abgasemissionen, Leistungs- und Drehmomentanforderung und/oder Außentemperatur einen Teil der mit Ladeluft durchströmten Kühlelemente teilweise oder vollständig. In den weiterhin durchströmten Kühlelementen steigt aufgrund der verminderten Querschnittsfläche die Strömungsgeschwindigkeit stark an. Durch die erhöhte Strömungsgeschwindigkeit und die reduzierte Kühlfläche ist die Abkühlung der Ladeluft stark verminderbar.

In Ausgestaltung der Erfindung ist das Luftsteuerungselement in einem Luftsammelgehäuse des Ladeluftkühlers angeordnet. Der Ladeluftkühler weist zwei Luftsammelgehäuse auf. Im ersten Luftsammelgehäuse verteilt sich die einströmende Ladeluft, strömt von dort gleichmäßig durch die Kühlelemente und sammelt sich erneut in einem zweiten Luftsammelgehäuse. Vom zweiten Luftsammelgehäuse strömt die Ladeluft zu den Brennräumen der Brennkraftmaschine. Das Luftsteuerungselement ist damit sowohl auf der Eingangs- als auch auf der Ausgangsseite des Ladeluftkühlers anordenbar. Die Anordnung in einem Luftsammelgehäuse beansprucht nahezu keinen zusätzlichen Bauraum, darüber hinaus ist der Ladeluftkühler mit dem Luftsteuerungselement als komplette Baueinheit vormontierbar.

In weiterer Ausgestaltung der Erfindung ist das Luftsteuerungselement eine Klappe. Die Klappe ist beispielsweise als rechteckige oder runde Scheibe ausgeführt und auf einer Welle drehbar gelagert. Steht die Grundfläche der Klappe senkrecht zur Strömungsrichtung der Ladeluft, so ist die Kühlfläche des Ladeluftkühlers maximal reduziert. Steht die Grundfläche parallel zur Strömungsrichtung, so erfolgt keine Verminderung der Kühlleistung. Eine drehbare Klappe ist kostengünstig herstellbar und nimmt wenig Bauraum in Anspruch.

In weiterer Ausgestaltung der Erfindung ist das Luftsteuerungselement über einen Steller schaltbar. Die Welle der Klappe ist mit einem Steller verbunden. Durch Ansteuerung des Stellers ist die Temperatur der aus dem Ladeluftkühler austretenden Ladeluft vorteilhaft einstellbar. Der Steller ist beispielsweise als Stellmotor oder als Unterdrucksteller ausführbar.

In weiterer Ausgestaltung der Erfindung ist die Ladeluft im Ladeluftkühler über Luft gekühlt. Der Ladeluftkühler ist mit Kühlluft, vorzugsweise mit Fahrtwind durchströmt. Die Luft strömt zwischen den Kühlelementen des Ladeluftkühlers hindurch. Die in den Kühlelementen strömende Ladeluft gibt über die Wandoberfläche der Kühlelemente Wärmeenergie an die Kühlluft ab. Mit Kühlluft durchströmte Ladeluftkühler sind kostengünstig herstellbar.

In weiterer Ausgestaltung der Erfindung ist die Ladeluft im Ladeluftkühler über Kühlflüssigkeit gekühlt. Der Ladeluftkühler ist mit Kühlmittel bevorzugt aus dem Kühlkreislauf der Brennkraftmaschine durchströmt. Das Kühlmittel fließt zwischen Kühlelementen des Ladeluftkühlers, die in den Kühlelementen strömende Ladeluft gibt Wärmeenergie an das Kühlmittel ab. Die Einbaulage flüssigkeitsdurchströmter Ladeluftkühler ist nahezu frei wählbar. Darüber hinaus ist das geringe Bauvolumen flüssigkeitsgekühlter Ladeluftkühler vorteilhaft.

In weiterer Ausgestaltung der Erfindung ist im Luftsammelgehäuse des Ladeluftkühlers ein Luftkanal, der Teile des Luftsammelgehäuses und/oder weitere Trennwände umfasst und der mit einem Teil der Kühlrohre des Ladeluftkühlers verbunden ist, angeordnet und in dem Luftkanal ist eine Klappe vorgesehen, mit der der Luftkanal ganz oder teilweise verschließbar ist. Der Luftkanal ist mit Kühlrohren des Ladeluftkühlers verbunden. Der Luftkanal ist aus Trennwänden und aus Gehäuseteilen des Luftsammelgehäuses gebildet. Die Trennwände sind in vorteilhafter Weise einstückig mit dem Luftsammelgehäuse ausgebildet. Das Luftsammelgehäuse ist vorzugsweise aus Kunststoff oder metallischem Werkstoff hergestellt. Bei geschlossener Klappe erfolgt in den mit dem Luftkanal verbundenen Kühlrohren des Ladeluftkühlers keine Kühlung. Die Ladeluft strömt vollständig über die noch geöffnete Kühlrohre durch den Ladeluftkühler. Bei geöffneter Klappe sind alle Kühlrohre des Ladeluftkühlers durchströmt. Die Anordnung ist durch die Nutzung des Bauraums im Luftsammelgehäuse sehr platzsparend.

Weitere Merkmale und Merkmalskombinationen ergeben sich aus der Beschreibung sowie den Zeichnungen. Konkrete Ausführungsbeispiele der Erfindung sind in den Zeichnungen vereinfacht dargestellt und in der nachfolgenden Beschreibung näher erläutert. Es zeigen
- Fig. 1: eine schematische Darstellung einer erfindungsgemäßen Brennkraftmaschine,
- Fig. 2: eine detaillierte Darstellung des in Fig.1 gezeigten Ladeluftkühlers und
- Fig. 3: Schnitt durch den Ladeluftkühler aus Fig.2.

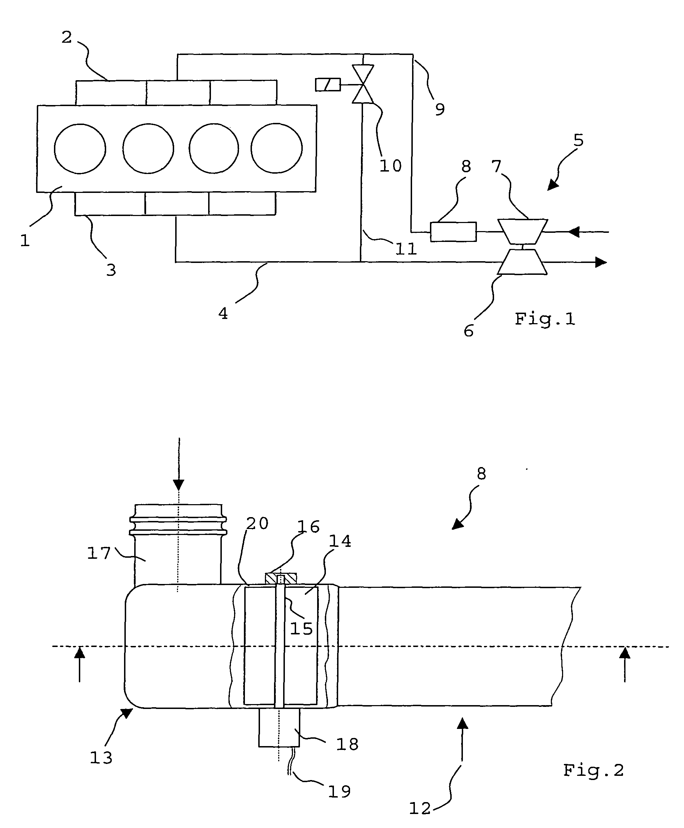

Gleiche Bauteile in den Figuren 1 bis 3 sind im folgenden mit den gleichen Bezugszeichen gekennzeichnet.

In Fig. 1 ist schematisch eine aufgeladene Brennkraftmaschine mit Abgasrückführung dargestellt. Die Brennkraftmaschine weist einen aus einem Zylinderkopf und einem Kurbelgehäuse aufgebauten Motorblock 1 mit zugehörigem Ansaugkrümmer 2 und Abgaskrümmer 3 auf. Als Aufladevorrichtung 5 ist ein Abgasturbolader mit einem Ladeluftkühler 8 vorgesehen.

Im Motorblock 1 erfolgt eine Verbrennung eines Gas-Luftgemisches. Über den Ansaugtrakt 2 strömt Luft in den Motorblock 1. Die Luft ist dabei entweder durch Einspritzung von Kraftstoff in den Ansaugtrakt 2 oder in einen Brennraum mit Kraftstoff angereichert. Ein bei der Verbrennung entstehendes Abgas strömt über den Abgaskrümmer 3 in eine Abgasleitung 4, die mit dem Abgasturbolader 5 verbunden ist.

Der Abgasturbolader 5 weist eine Turbine 6 und einen Verdichter 7 auf. Das in den Abgasturbolader 5 strömende Abgas treibt die Turbine 6 an, die mit dem Verdichter 7 mechanisch gekoppelt ist. Der Verdichter 7 verdichtet angesaugte Frischluft und führt dieses über eine Ladeleitung 9 den im Motorblock 1 angeordneten Brennräumen zu.

In einem modifizierten, nicht dargestellten Ausführungsbeispiel erfolgt die Verdichtung der Ansaugluft über einen mechanischen Lader, der mit der Kurbelwelle in Wirkverbindung steht.

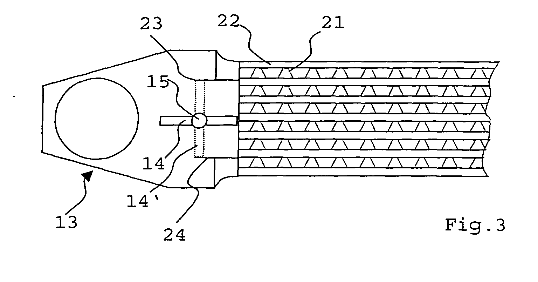

In der Ladeleitung 9 ist ein Ladeluftkühler 8 angeordnet. Die Ladeluftkühlung reduziert die thermische Belastung der Brennkraftmaschine und führt zu geringeren NOₓ-Anteilen im Abgas. Die mit sinkender Ladelufttemperatur erreichte Dichtesteigerung führt infolge einer verbesserten Brennraumbefüllung zu einer Leistungserhöhung. Die im Abgasturbolader 5 komprimierte Ansaugluft gibt im Ladeluftkühler 8 Wärmeenergie an ein Kühlmedium ab. Die Ladeluft ist gemäß Fig.2 und Fig.3 im Ladeluftkühler 8 durch einen Kühlluftstrom 12 gekühlt. Der Kühlluftstrom 12 ist durch Fahrtwind oder durch einen zusätzlichen Lüfter erzeugbar.

In einem modifizierten Ausführungsbeispiel ist die Ladeluft in einem mit Kühlmittel der Brennkraftmaschine durchströmten Ladeluftkühler 8 gekühlt.

Über eine Abgasrückführleitung 11 findet eine Abgasrückführung statt. Das dem Brennraum nochmals zugeführte Abgas dient zur Absenkung der Verbrennungsspitzentemperatur und einer damit verbundenen Reduzierung der NOₓ-Bildung. Ein von einer nicht dargestellten Motorsteuerung angesteuertes Abgasrückführventil 10 steuert die Abgasrückführraten.

In Fig. 2. ist ein mit Kühlluft durchströmter Ladeluftkühler 8 dargestellt. Die Ladeluft strömt über einen Einströmstutzen 17 in ein Luftsammelgehäuse 13 des Ladeluftkühlers. In dem Luftsammelgehäuse 13 verteilt sich die Ladeluft gleichmäßig. Aus dem Luftsammelgehäuse 13 strömt die Ladeluft in die in Fig. 3 gezeigte Kühlelemente 22, die beispielsweise als Rohre ausgeführt sind. Zwischen den Kühlrohren 22 sind Kühllamellen 21 angeordnet, die einen Wärmeübergang der Ladeluft auf die durch den Ladeluftkühler 8 strömende Kühlluft 12 begünstigen. Über einen nicht dargestellten Austrittsstutzen des Ladeluftkühlers 8 strömt die gekühlte Ladeluft über die Ladeleitung 9 zum Ansaugstutzen 2 des in Fig 1. gezeigten Motorblocks 1.

In dem Luftsammelgehäuse 13 des Ladeluftkühlers 8 ist ein Luftsteuerungselement 14 in Form einer rechteckigen Klappe angeordnet, die gemäß Fig.2 mit einer drehbar gelagerten Welle 15 verbunden ist. Die Welle 15 ist einem Steller 18 zugeordnet und in einem Gleitlager 16 gelagert. Der Steller 18 ist als Stellmotor ausgeführt, dessen Ansteuerung über ein nicht dargestelltes Steuergerät erfolgt. Das Steuergerät ist über elektrische Leitungen 19 mit dem Stellmotor 18 verbunden. Stirnseitig dichtet die Klappe 14 über den Spalt 20 gegen das Gehäuse des Luftsammelgehäuses 13, in Umfangsrichtung erfolgt die Abdichtung gemäß Fig.3 über den Spalt 23 zu einer im Luftsammelgehäuse 13 angeordneten Trennwand 24. Die Größe der Klappe 14 und des zugehörigen Luftkanals ist so gewählt, dass die geschlossene Klappe 14' den überwiegenden Teil der Kühlrohre 22 verschließt. In der in Fig.3 dargestellte Ausführung sind bei geschlossener Klappe 14' nur zwei Kühlrohre 22 durchströmt. Sind in dem Ladeluftkühler 8 bezogen auf die Kühlluftströmungsrichtung mehrere Kühlrohre 22 hintereinander angeordnet, so sind bei geschlossener Klappe 14' nur zwei Kühlrohrebenen durchströmbar. Die Größe der Klappe 14 und die damit verbundene Anzahl der durchströmten Kühlrohre 22 in geschlossenem Zustand ist selbstverständlich auf die Erfordernisse der Brennkraftmaschine abstimmbar.

Brennkraftmaschinen mit hohem Wirkungsgrad wie beispielsweise aufgeladene Dieselmotoren mit Direkteinspritzung geben im unteren Teillastbereich sehr wenig Wärme ins Kühlmittel ab. Damit ist eine ausreichende Beheizung eines Passagierraums des Kraftfahrzeuges nicht darstellbar. Um einen teuren Einsatz von Zusatzheizsystemen zu vermeiden, ist angestrebt, die Erwärmung der Brennkraftmaschine zu beschleunigen. Je höher die Ansauglufttemperatur desto schneller erwärmt sich die Brennkraftmaschine. Die Ansaugluft ist nach der Verdichtung im Abgastrubolader 5 erwärmt, eine nachfolgende Abkühlung in dem in Fig. 2 und Fig.3 gezeigten Ladeluftkühler 8 ist in vorteilhafter Weise weitgehend vermeidbar. Durch die Klappe 14 im Luftsammelgehäuse 13 des Ladeluftkühlers sind in Abhängigkeit von Betriebsparametern insbesondere bei niedrigen Lastzuständen und niedrigen Kühlmitteltemperaturen ein Teil der Kühlrohre 22 verschließbar. Dadurch ist die Kühlfläche des Ladeluftkühlers 8 reduziert. Die Kühlung der durch den Ladeluftkühler 8 strömenden Luft ist damit deutlich vermindert und die Erwärmung der Brennkraftmaschine beschleunigt.

In einem modifizierten Ausführungsbeispiel ist die Klappe 14 beliebig, beispielsweise rund oder quadratisch ausführbar.

Als weitere Modifikation ist der Luftführungskanal ausschließlich aus Trennwänden 24, d.h. ohne Einbeziehung von Teilen der Gehäusewand des Luftsammelgehäuses 13, aufgebaut.

Zusätzlich erhöht die Drosselung der Ladeluft die Ladungswechselarbeit, die zu einer schnelleren Erwärmung der Brennkraftmaschine beiträgt. Aufgrund der sich durch die Drosselung der Ladeluft einstellenden Druckverhältnisse ist durch Ansteuerung des Abgasrückführventils 10 eine Erhöhung der Abgasrückführungsrate darstellbar. Mit der Erhöhung der Abgasrückführrate nimmt der Gesamtluftüberschuss der Brennkraftmaschine ab und die Verbrennungstemperatur steigt an. Der Anstieg der Verbrennungstemperatur führt zu einer schnelleren Erwärmung des Kühlmittels womit die Verfügbarkeit der Passagierraumheizung erhöht ist.

### Bezugszeichenliste

- 1: Motorblock
- 2: Ansaugkrümmer
- 3: Abgaskrümmer
- 4: Abgasleitung
- 5: Aufladevorrichtung, Abgasturbolader
- 6: Turbine
- 7: Verdichter
- 8: Ladeluftkühler
- 9: Ladeleitung
- 10: Abgasrückführventil
- 11: Abgasrückführleitung
- 12: Kühlluftstrom
- 13: Luftsammelgehäuse
- 14: Luftsteuerungselement, Klappe
- 14': Geschlossene Klappe
- 15: Welle
- 16: Gleitlager
- 17: Einströmstutzen
- 18: Steller, Stellmotor
- 19: Elektrische Leitungen
- 20: Axialer Spalt
- 21: Kühllamellen
- 22: Kühlelemente, Kühlrohre
- 23: Spalt in Umfangsrichtung
- 24: Trennwände

## Patentansprüche

1. Brennkraftmaschine mit Aufladung für ein Kraftfahrzeug, mit
- einer Aufladevorrichtung (5), die Ansaugluft auf ein höheres Druckniveau verdichtet,
- einem Ladeluftkühler (8), der die verdichtete Ansaugluft kühlt und
- einer Steuerungsvorrichtung, die die Temperatur des aus dem Ladeluftkühler (8) austretenden Luftstroms beeinflusst
**dadurch gekennzeichnet, dass** die Steuerungsvorrichtung ein Luftsteuerungselement (14) umfasst, das mit Ladeluft durchströmte Kühlelemente (22) des Ladeluftkühlers (8) teilweise oder vollständig verschließt, so dass in Abhängigkeit von Betriebsparametern die wirksame Kühlfläche reduziert ist.

2. Brennkraftmaschine nach Anspruch 1,
**dadurch gekennzeichnet, dass**
das Luftsteuerungselement (14) in einem Luftsammelgehäuse (13) des Ladeluftkühlers (8) angeordnet ist.

3. Brennkraftmaschine nach einem der Ansprüche 1 bis 3,
**dadurch gekennzeichnet, dass**
das Luftsteuerungselement (14) als Klappe ausgeführt ist.

4. Brennkraftmaschine nach einem der Ansprüche 1 bis 4,
**dadurch gekennzeichnet, dass**
das Luftsteuerungselement (14) über einen Steller (18) schaltbar ist.

5. Brennkraftmaschine nach einem der Ansprüche 1 bis 5,
**dadurch gekennzeichnet, dass**
die Ladeluft im Ladeluftkühler (8) über einen Luftstrom (12) gekühlt ist.

6. Brennkraftmaschine nach einem der Ansprüche 1 bis 4,
**dadurch gekennzeichnet, dass**
die Ladeluft im Ladeluftkühler (8) über Kühlflüssigkeit gekühlt ist.

7. Brennkraftmaschine nach einem der Ansprüche 1 bis 6,
**dadurch gekennzeichnet, dass**
im Luftsammelgehäuse (13) des Ladeluftkühlers (8) ein Luftkanal, der Teile des Luftsammelgehäuses (13) und/oder weitere Trennwände (24) umfasst und der mit einem Teil der Kühlrohre (22) des Ladeluftkühlers (8) verbunden ist, angeordnet ist und dass in dem Luftkanal eine Klappe (14) vorgesehen ist, mit der der Luftkanal ganz oder teilweise verschließbar ist.

8. Brennkraftmaschine nach Anspruch 7,
**dadurch gekennzeichnet, dass**
die Klappe (14) rechteckig ausgebildet ist.

9. Brennkraftmaschine nach einem der Ansprüche 1 bis 8,
**dadurch gekennzeichnet, dass**
die Aufladevorrichtung (5) als Abgasturbolader ausgeführt ist.
